# EUROPÄISCHE PATENTSCHRIFT

(11) **EP 3 167 118 B1**
(45) Veröffentlichungstag und Bekanntmachung des Hinweises auf die Patenterteilung: **22.08.2018**
(21) Anmeldenummer: 15724708.1
(22) Anmeldetag: 28.05.2015
(51) Int. Cl.: D21H 27/20, D21H 27/36, B32B 27/10, B32B 29/00

(54) **BASISMATERIAL FÜR TAPETEN**
BASE MATERIAL FOR WALLPAPERS
MATÉRIAU DE BASE POUR TAPISSERIES

(30) Priorität: 10.07.2014 EP 14176493
(43) Veröffentlichungstag der Anmeldung: 17.05.2017
(73) Patentinhaber: Schoeller Technocell GmbH & Co. KG, 49086 Osnabrück (DE)
(72) Erfinder: KNAPP, Maximilian Theodor, 74369 Löchgau (DE); HAGGENMÜLLER, Georg, 87647 Unterthingau (DE); WALTER, Hermann, 79822 Titisee-Neustadt (DE); NAJMUSCHIN, Dennis, 87600 Kaufbeuren (DE); STEINBECK, Rainer, 49088 Osnabrück (DE)
(74) Vertreter: Cohausz & Florack
(86) Internationale Anmeldenummer: PCT/EP2015/061859
(87) Internationale Veröffentlichungsnummer: WO 2016/005100

(56) Entgegenhaltungen:
- WO-A2-2010/045201
- DE-A1- 19 754 998

## Beschreibung

### TECHNISCHES GEBIET DER ERFINDUNG

Die Erfindung betrifft ein Basismaterial für eine trocken abziehbare Tapete mit verbesserter Dimensionsstabilität und Bedruckbarkeit.

### HINTERGRUND DER ERFINDUNG

Unter dem Begriff Tapete versteht man eine flächige Wandbekleidung, meist aus Papier, Glasfasern und/oder Kunststoff, die mittels eines geeigneten Klebstoffs auf die Wand aufgeklebt wird. Tapeten sind meist farbig, mit Mustern bedruckt oder auch geprägt. Die Einteilung der unterschiedlichen Tapeten erfolgt auf Basis der verwendeten Materialien und Herstellungsverfahren. Die klassische Mustertapete ist eine bedruckte Tapete aus Papier. Die Prägetapete oder Strukturtapete besteht aus mehreren Papierlagen, die durch Prägen mit einer Prägewalze zusammengefügt werden. Zur Befestigung der Tapetenbahnen auf der Wand werden diese üblicherweise rückseitig mit einem Kleber, insbesondere Tapetenkleister, versehen und anschließend an die Wand angedrückt (Tapezieren). Bei den Weiterverarbeitungsschritten, wie Bedrucken oder Tapezieren, kommt es durch die Einwirkung von Wasser oder anderen Flüssigkeiten zur Dehnung und nach anschließender Trocknung zum Schrumpfen des Materials.

Darüber hinaus gibt es sogenannte Vliestapeten. Der Unterschied zu anderen Tapeten liegt hauptsächlich im Trägermaterial. Diese Basis besteht bei den meisten Vliestapeten aus einem glatten und reißfesten Fasermaterial aus Cellulose- und Kunstfasern (Textil- und/oder Kunststofffasern).

Vliestapeten weisen eine Reihe von Vorteilen auf. Sie müssen nicht mit einem Tapetenkleister eingestrichen werden, sondern können trocken bahnweise auf die mit einem Spezialkleber für Vlies eingestrichene Wand aufgebracht werden. Sie sind maß- und schneidstabil und wasserdampfdiffusionsfähig. Im Vergleich zu klassischen Papiertapeten sind Vliestapeten im feuchten Zustand und bei Trocknung weitgehend formstabil. Sie sind trocken abziehbar, weil die Zugbelastbarkeit des Vliesgewebes höher ist als die Klebewirkung des Klebers.

Nachteilig an diesen Vliestapeten ist jedoch, dass sie keine optimale Bedruckbarkeit aufweisen.

Die zum Anbringen der Tapeten auf die Wand verwendeten Kleister sind Klebstoffe in Form eines wässrigen Quellungsproduktes. Als Kleister-Grundstoffe werden Stärke und wasserlösliche organische Cellulose-Verbindungen verwendet und mit entsprechenden Wassermengen verrührt. Kleister binden durch Verdunstung des Wassers physikalisch ab. Die Kleister können zusätzlich weitere Bestandteile wie Kunstharze, Konservierungsmittel oder Mittel zur Erhöhung oder Verringerung der Klebkraft enthalten.

Die Problematik einer guten Bedruckbarkeit und geringer Nassdehnung der Tapetensubstrate ist hinreichend im Stand der Technik beschrieben, und es sind verschiedene Lösungswege zur Verbesserung der erwähnten Anforderungen vorgeschlagen worden.

Die WO 2008/040635 A1 beschreibt ein Tapetensubstrat mit minimaler Nassdehnung und guter Bedruckbarkeit, das aus zwei durch Gautschen miteinander verfilzten Faserstoffbahnen besteht. Die Dimensionsstabilität des Materials ist jedoch nicht ausreichend, um Spaltbildungen zwischen zwei auf Stoß verlegten Tapetenbahnen beim Trocknen sicher zu vermeiden.

Die US 3 294 618 beschreibt ein Papierprodukt, das unter anderem auch als Tapetensubstrat verwendet werden kann. Es wird mittels eines Rundsiebverfahrens hergestellt und besteht aus mehreren Faserstoffschichten. Während des Herstellungsprozesses wird auf die obere (erste) nasse Schicht eine Polymerdispersion aufgesprüht, danach folgen weitere Papierschichten. Nach dem Trocknen und Kalandrieren bilden die Polymerpartikel einen geschlossenen Film, der eine Feuchtigkeitsbarriere für das aus Tapetenkleister stammende Wasser bilden soll. Auf die äußere untere Schicht des Papiergebildes wird ein dekorativer Kunststofffilm aufgetragen. Nachteilig ist, dass durch die prozessbedingte Verdichtung der oberen Schicht die Tapete Wandunebenheiten nur ungenügend ausgleichen kann.

Die DE 197 54 998 A1 beschreibt Tapeten und deren Herstellung, wobei zwei Papierbahnen trocken oder nass mit einem Klebstoff bestrichen, getrocknet und anschließend die beiden Bahnen unter Wärme- und/oder Druckeinwirkung miteinander verbunden werden. Gemäß einer weiteren Ausführungsform dieses Dokuments werden die Papierbahnen unter Einbringung eines strukturgebenden Materials, vorzugsweise Metall oder Kunststoff, miteinander verbunden.

Die WO 2010/045201 A2 beschreibt ein Papier-/Kunststofflaminat zur Verwendung in Digitalkopierern und Laserdruckern zur elektromagnetischen Abschirmung.

### ZUSAMMENFASSUNG DER ERFINDUNG

Die Aufgabe der Erfindung ist es, ein Basismaterial für eine trocken abziehbare Tapete bereitzustellen, das bei der Weiterverarbeitung, d.h. optionalem Bedrucken und Tapezieren, eine gegenüber dem Stand der Technik verbesserte Dimensionsstabilität und eine sehr gute Bedruckbarkeit aufweist.

Gelöst wird diese Aufgabe durch ein Basismaterial mit einem mehrschichtigen Faserstoffbahnverbund, der mindestens eine erste Faserstoffbahn mit einer beim Einsatz der Tapete zur Oberfläche des zu beschichtenden Objekts weisenden Seite, mindestens eine geglättete zweite Faserstoffbahn mit einer beim Einsatz der Tapete nach außen weisenden Seite und mindestens eine zwischen den Faserstoffbahnen extrudierte Schicht eines thermoplastischen Polymers, insbesondere eines Polyethylens, enthält, wobei die erste Faserstoffbahn ein größeres spezifisches Volumen als die zweite Faserstoffbahn aufweist.

Gegenstand der Erfindung ist ferner ein Verfahren zur Herstellung des erfindungsgemäßen Basismaterials, in dem man in einen durch eine erste und eine zweite Faserstoffbahn gebildeten Spalt eine Schmelze eines thermoplastischen Harzes extrudiert und unter Bildung eines Faserstoffbahnverbunds abkühlen lässt, wobei die erste Faserstoffbahn ein größeres spezifisches Volumen als die zweite Faserstoffbahn aufweist.

Gegenstand der Erfindung ist ferner ein Verfahren zur Herstellung eines erfindungsgemäßen Basismaterials, in dem man auf einer Seite einer Kunststofffolie aus einem thermoplastischen Harz die erste Faserstoffbahn und auf der anderen Seite die zweite Faserstoffbahn unter Einwirkung von Druck und Wärme aufbringt, wobei die erste Faserstoffbahn ein größeres spezifisches Volumen als die zweite Faserstoffbahn aufweist.

Gegenstand der Erfindung ist schließlich eine trocken abziehbare Tapete, enthaltend ein erfindungsgemäßes Basismaterial.

### BEVORZUGTE AUSFÜHRUNGSFORMEN DER ERFINDUNG

In einer bevorzugten Ausgestaltung der Erfindung kann das spezifische Volumen der ersten voluminösen Faserstoffbahn mindestens 1,3 cm³/g, insbesondere 1,5 cm³/g bis 3,0 cm³/g, vorzugsweise jedoch 1,7 cm³/g bis 2,4 cm³/g betragen.

Die erste voluminöse Faserstoffbahn kann vorzugsweise Zellstofffasern und zusätzlich Polyesterfasern in einer Menge von bis 50 Gew.-%, insbesondere 5 Gew.-% bis 30 Gew.-%, bezogen auf die Gesamtmenge der Fasern der Faserstoffbahn, enthalten.

In einer weiteren Ausgestaltung der Erfindung kann die erste voluminöse Faserstoffbahn mindestens zwei miteinander verbundene Faserstoffschichten enthalten.

Das Flächengewicht der voluminösen ersten Faserstoffbahn kann vorzugsweise 30 bis 200 g/m², insbesondere 50 bis 120 g/m² betragen.

Die erste Faserstoffbahn kann in einer bevorzugten Ausgestaltungsform auf der bei Einsatz der Tapete zur Oberfläche des zu beschichtenden Objekts weisenden Seite mit einer die Abziehbarkeit verbessernden Funktionsschicht versehen werden. Diese Funktionsschicht kann beispielsweise Wachsdispersionen und/oder Polymerlatex enthalten.

Das spezifische Volumen der zweiten Faserstoffbahn des erfindungsgemäßen Basismaterials beträgt vorzugsweise weniger als 1,3 cm³/g, insbesondere 0,8 cm³/g bis 1,2 cm³/g.

In einer bevorzugten Ausgestaltung der Erfindung enthält die zweite Faserstoffbahn Zellstoff- und keine Synthetik-Fasern. Besonders gut geeignet für diese Ausgestaltung sind unbeschichtete oder beschichtete Papiere. Diese können neben den Zellstofffasern Leimungsmittel wie Alkylkentendimere, Fettsäuren und/oder Fettsäuresalze, epoxydierte Fettsäureamide, Alkenyl- oder Alkylbernsteinsäureanhydrid, Nassfestmittel wie Polyamin-Polyamid-Epichlorhydrin, Trockenfestmittel wie anionische, kationische oder amphotere Polyamide, optische Aufheller, Füllstoffe, Pigmente, Farbstoffe, Entschäumer und weitere in der Papierindustrie bekannte Hilfsmittel enthalten. Die Papiere können oberflächengeleimt sein. Hierzu geeignete Leimmittel sind beispielsweise Polyvinylalkohol oder oxydierte Stärke. Die Herstellung kann auf einer Fourdrinier- oder einer Yankee-Papiermaschine (Zylinder-Papiermaschine) erfolgen. Das Flächengewicht der Papiere kann 30 bis 250 g/m², insbesondere 40 bis 150 g/m², betragen. Die Papiere können in unverdichteter oder verdichteter Form (geglättet) eingesetzt werden. Besonders gut geeignet sind Papiere mit einer Dichte von 0,5 bis 1,1 g/cm³, insbesondere 0,9 bis 1,05 g/cm³.

In einer weiteren Ausgestaltung der Erfindung können hochgefüllte Papiere mit einem Füllstoffgehalt von bis zu 50 Gew.-% Füllstoff als zweite Faserstoffbahn eingesetzt werden.

Als Zellstofffasern zur Papierherstellung können beispielsweise gebleichter Hartholz-Kraftzellstoff (LBKP), gebleichter Nadelholz-Kraftzellstoff (NBKP), gebleichter Laubholz-Sulfitzellstoff (LBSP) oder gebleichter Nadelholz-Sulfitzellstoff (NBSP) eingesetzt werden. Weiterhin können auch Zellstofffasern aus recyclierten Altpapieren eingesetzt werden. Es können auch Mischungen verschiedener Zellstofffasern eingesetzt werden.

In einer besonderen Ausgestaltung der Erfindung werden Zellstofffasern aus 100% Laubholzzellstoff eingesetzt. Die mittlere Faserlänge des ungemahlenen Zellstoffs beträgt vorzugsweise 0,6 bis 0,85 mm (Kajaani-Messung).

Eine weitere Ausgestaltung der Erfindung sieht vor, ein Gemisch aus Langfaserzellstoff (NBKP) und Kurzfaserzellstoff (LBKP) in einem Verhältnis von 1:4 bis 4:1 einzusetzen.

Als Füllstoff können beispielsweise Kaoline, Calciumcarbonat in seiner natürlichen Form wie Kalkstein, Marmor oder Dolomitstein, gefälltes Calciumcarbonat, Calciumsulfat, Bariumsulfat, Titandioxid, Talkum, Silica, Aluminiumoxid und deren Gemische in der zweiten Faserstoffbahn erfindungsgemäß eingesetzt werden.

In einer weiteren Ausgestaltung der Erfindung kann die zweite Faserstoffbahn auf der nach außen weisenden Seite eine pigmenthaltige Schicht enthalten. Das Pigment kann ein Metalloxid, Silikat, Carbonat, Sulfid oder Sulfat sein. Besonders gut geeignet sind Pigmente wie Kaoline, Talkum, Calciumcarbonat und/oder Bariumsulfat. In der pigmenthaltigen Schicht kann jedes bekannte wasserlösliche und/oder wasserdispergierbare Bindemittel eingesetzt werden. Das Auftragsgewicht kann 0,1 bis 30 g/m², insbesondere 1 bis 20 g/m², vorzugsweise 2 bis 10 g/m² betragen.

Für die zwischen den Faserstoffbahnen erfindungsgemäß angeordnete extrudierte Schicht eines thermoplastischen Polymers sind insbesondere Polyolefine geeignet, vorzugsweise Polyethylen niedriger Dichte (LDPE) mit einer Dichte von weniger als 0,935 g/cm³ oder ein Gemisch aus LDPE und HDPE (Polyethylen hoher Dichte größer als 0,935 g/cm³) vorzugsweise in einem Mengenverhältnis von etwa 1:1.

In einer weiteren Ausgestaltung der Erfindung kann die extrudierte Schicht Weißpigmente wie Titandioxid sowie weitere Hilfsstoffe wie optische Aufheller, Farbstoffe und Dispergierhilfsmittel enthalten.

Das Auftragsgewicht der extrudierten Schicht kann 3 bis 50 g/m², insbesondere 5 bis 30 g/m², bevorzugt jedoch 10 bis 20 g/m² betragen. In einer bevorzugten Ausgestaltungsform der Erfindung ist zwischen der extrudierten Schicht und den beiden Faserstoffbahnen keine zusätzliche Klebeschicht vorhanden.

Die zuvor beschriebenen Faserstoffbahnen können in einem Laminator mittels Extrusion miteinander verbunden werden. Dabei wird eine Thermoplast-Schmelze über eine Breitschlitzdüse in den Spalt zwischen die beiden Faserstoffbahnen eingebracht und der Bahnenverbund an einen Kühlzylinder gepresst.

Der erfindungsgemäße Faserstoffbahnverbund kann auf der zur Oberfläche des zu beschichtenden Objektes weisenden Seite eine Bekk-Glätte von weniger als 20 Sekunden, vorzugsweise von 5 bis 20 Sekunden aufweisen.

Die Glätte auf der nach außen weisenden Seite des erfindungsgemäßen Faserstoffbahnverbundes kann mindestens 20 Bekk-Sekunden, besonders bevorzugt 50 bis 300 Bekk-Sekunden betragen. Die Glättung von Faserstoffbahnen kann durch Kalandrierung oder ein anderes zur Glättung von Papieren übliches Werkzeug.

Das Gesamtflächengewicht des erfindungsgemäßen Faserstoffbahnverbunds kann 80 g/m² bis 500 g/m², insbesondere 130 g/m² bis 250 g/m², betragen.

Zur Herstellung von Tapeten kann das erfindungsgemäße Basismaterial in bekannter Weise bedruckt und/oder geprägt werden. Das Basismaterial kann vor und nach der Bedrucken und Prägen lackiert werden.

Die folgenden Beispiele dienen der weiteren Erläuterung der Erfindung.

### BEISPIELE

### Beispiel V1 (Vergleich)

Ein Vliespapier wurde aus einem Gemisch aus vier Gewichtsteilen eines Laubholz-Zellstoffs und einem Gewichtsteil eines Nadelholz-Zellstoffs unter Zugabe von Synthetikfasern in einer Menge von 20 Gew.-%, bezogen auf die gesamte Zellstoff-Fasermenge, hergestellt. Die Konzentration der Fasern im Dünnstoff betrug 1 Gew.-%, bezogen auf die Masse der Fasersuspension. Dem Dünnstoff wurden Zusatzstoffe zugesetzt wie ein polymeres Bindemittel auf Acrylat-Basis (Acronal® 2728, BASF SE) in einer Menge von 5 Gew.-%, ein Nassfestmittel Polyamin-Polyamid-Epichlorhydrinharz (Kymene®) in einer Menge von 6 Gew.-% und ein neutrales Leimungsmittel Alkylketendimer (AKD) in einer Menge von 2 Gew.-%. Die Mengenangaben beziehen sich auf die Faserstoffmasse. Der Dünnstoff, dessen pH-Wert auf etwa 7,5 eingestellt wurde, wurde vom Stoffauflauf auf das Sieb der Papiermaschine gebracht, worauf die Blattbildung unter Entwässerung der Bahn in der Siebpartie der Papiermaschine erfolgte. In der Pressenpartie erfolgte die weitere Entwässerung der Faserstoffbahn auf einen Wassergehalt von 60 Gew.-%, bezogen auf das Bahngewicht. Die weitere Trocknung erfolgte in der Trockenpartie der Papiermaschine mit beheizten Trockenzylindern. Es entstand ein Vliespapier mit einem Flächengewicht von 65 g/m² und einer Feuchte von etwa 5%.

### Beispiele V2-V4 (Vergleich)

Als Vergleich wurden ferner die im "Duplex"-Verfahren hergestellten Vliese der Fa. Dresden Papier GmbH herangezogen (s. auch WO 2008/040635 A1) und auf Dimensionsstabilität und Bedruckbarkeit untersucht.

Folgende Vliese der Dresden Papier GmbH wurden untersucht:
- Duplex Tapetenvlies beschichtet 85 g/m² (V2)
- Duplex Tapetenvlies beschichtet 90 g/m² (V3)
- Duplex Tapetenvlies unbeschichtet 150 g/m² (V4).

### Beispiel 5 (Erfindung)

Ein Papier wurde aus einem Gemisch aus drei Gewichtsteilen eines Eukalyptus-Zellstoffs, einem Gewichtsteil eines Nadelholz-Zellstoffs und Kaolin p75 (Prechtel GmbH, Schwetzingen) in einer Menge von 15 Gew.-%, bezogen auf die Masse des Faserstoffs hergestellt. Die Konzentration der Fasern im Dünnstoff betrug 1 Gew.-%, bezogen auf die Masse der Zellstoffsuspension. Dem Dünnstoff wurden Polyamin-Polyamid-Epichlorhydrinharz (Kymene®) als Nassfestmittel in einer Menge von 6,7 Gew.-% und als neutrales Leimungsmittel ein Alkylketendimer (AKD) in einer Menge von 2,9 Gew.-%, bezogen auf die Faserstoffmasse. Der Dünnstoff, dessen pH-Wert auf etwa 7,5 eingestellt wurde, wurde vom Stoffauflauf auf das Sieb der Papiermaschine gebracht, worauf die Blattbildung unter Entwässerung der Bahn in der Siebpartie der Papiermaschine erfolgte. In der Pressenpartie erfolgte die weitere Entwässerung der Papierbahn auf einen Wassergehalt von 60 Gew.-%, bezogen auf das Bahngewicht. Die weitere Trocknung erfolgte in der Trockenpartie der Papiermaschine mit beheizten Trockenzylindern. Anschließend wurde die Papierbahn kalandriert. Es entstand ein sehr glattes Papier mit einem Flächengewicht von 30 g/m², einem spezifischen Volumen von 1,1 cm³/g und einer Feuchte von etwa 7%.

Im nächsten Verfahrensschritt wurden das Vliespapier aus Beispiel V1 und das in Beispiel 5 hergestellte Papier in einem Laminator mit einem LDPE mit einer Dichte von 0,924 g/cm³ miteinander verbunden. Die Auftragsmenge des Polyethylens betrug 10 g/m². Die Extrusionslaminierung erfolgte bei einer Schmelzentemperatur des LDPE von 315 °C.

Die nach außen weisende Seite der erhaltenen Faserverbundbahn wies eine Bekk-Glätte von 165 Sekunden (Bekk-Methode nach DIN 53107) auf. Die Bekk-Glätte der zur Oberfläche des zu beschichtenden Objekts weisenden Seite betrug 7 Sekunden.

### Beispiel 6 (Erfindung)

Es wurde eine sehr glatte Papierbahn aus dem gleichen Dünnstoff und in gleicher Weise wie in Beispiel 5 hergestellt, aber der Stoffauflauf wurde so eingestellt, dass das Flächengewicht der Papierbahn bei 45 g/m²,das spezifische Volumen bei 1,15 cm³/g und die Feuchte bei 7% lag. Im nächsten Schritt wurde aus der so erhaltenen Papierbahn, der Vliespapierbahn aus Beispiel V1 und LDPE in gleicher Weise wie in Beispiel 5 eine Faserstoffverbundbahn hergestellt.

Die Bekk-Glätte der nach außen weisenden Seite der so erhaltenen Faserstoffverbundbahn betrug 125 Sekunden. Die Bekk-Glätte der zur Oberfläche des zu beschichtenden Objekts weisenden Seite betrug 5 Sekunden.

### Beispiel 7 (Erfindung)

Ein Papier wurde aus einem Gemisch aus einem Gewichtsteil Eukalyptus-Zellstoff, einem Gewichtsteil Nadelholz-Zellstoff und Titandioxid in einer Menge von 16 Gew.-%, bezogen auf die Masse des Faserstoffs, hergestellt. Die Konzentration der Fasern im Dünnstoff betrug 1 Gew.-%, bezogen auf die Masse der Zellstoffsuspension.

Dem Dünnstoff wurde Polyamin-Polyamid-Epichlorhydrinharz (Kymene®) als Nassfestmittel in einer Menge von 1 Gew.-% zugesetzt, bezogen auf die Faserstoffmasse. Der pH-Wert des Dünnstoffs wurde auf etwa 6,5 eingestellt. Der Dünnstoff wurde vom Stoffauflauf auf das Sieb der Papiermaschine gebracht, worauf die Blattbildung unter Entwässerung der Bahn in der Siebpartie der Papiermaschine erfolgte. In der Pressenpartie erfolgte die weitere Entwässerung der Papierbahn auf einen Wassergehalt von etwa 60 Gew.-%, bezogen auf das Bahngewicht. Die weitere Trocknung erfolgte in der Trockenpartie der Papiermaschine mit beheizten Trockenzylindern sowie einer Trocknung und Glättung des Papiers über einen Yankeezylinder. Anschließend wurde die Papierbahn kalandriert. Es entstand ein sehr glattes Papier mit einem Flächengewicht von 130 g/m², einem spezifischen Volumen von 1,15 cm³/g und einer Feuchte von etwa 2%.

Im nächsten Schritt wurde aus der so erhaltenen Papierbahn, der Vliespapierbahn aus Beispiel V1 und LDPE in gleicher Weise wie in den Beispielen 5 und 6 eine Faserstoffverbundbahn hergestellt. Die Bekk-Glätte der nach außen weisenden Seite der so erhaltenen Faserstoffverbundbahn betrug 61 Sekunden. Die Bekk-Glätte der zur Oberfläche des zu beschichtenden Objekts weisenden Seite betrug 5 Sekunden.

Die hergestellten Faserstoffbahnverbunde wurden auf Dimensionsstabilität und Bedruckbarkeit untersucht. Ergebnisse sind in Tabelle 1 zusammengestellt.

Die gemäß den Beispielen und dem Vergleichsbeispiel erhaltenen Materialien wurden den nachstehend beschriebenen Prüfungen ZUR Prüfung der Dimensionsstabilität und der Bedruckbarkeit unterzogen.

Nassdehnung (interne Prüfungsmethode): Zweck der Prüfung ist die Bestimmung der Dehnungsdynamik eines nassen Probestreifens beim einseitigen Flüssigkeitskontakt unter einer definierten Zuglast nach festgelegter Zugdauer.

Die Prüfung wird mit Hilfe des Nassdehnungsmessgerätes WSD-Analyzer der Emtec Electronic GmbH durchgeführt. Für die Prüfung werden Probestreifen mit den Abmessungen 60 mm x 210 mm rechtwinkelig zur Maschinenlaufrichtung der Materialbahn ausgeschnitten, in die dafür vorgesehene Halterung des Gerätes eingespannt und mit einer Prüfflüssigkeit (hier: Wasser) benetzt und einer Zugkraft von 1 N für eine Messdauer von 25 Sekunden ausgesetzt. Der elektronisch errechnete Dehnungswert wird in Prozent angegeben und aus drei Messungen über die Bahnbreite ein Mittelwert errechnet.

Schrumpfmessung (interne Prüfungsmethode): Zweck der Prüfung ist die Bestimmung der Dynamik der Dimensionsänderung der zu untersuchenden Materialprobe unter Hitzeeinfluss. Die Prüfung wird mit Hilfe des HSA Shrinkage Analyzer der Emtec Electronic GmbH durchgeführt. Hierzu werden Probestreifen mit den Abmessungen 60 mm x 250 mm quer zur Maschinenlaufrichtung der Materialbahn ausgestanzt. Die Probestreifen werden von beiden Seiten auf eine mit Wasser gefüllte Befeuchtungsschale gelegt. Die Einwirkzeit pro Seite beträgt 5 Sekunden. Die feuchten Probestreifen werden mit einem Ende in die dafür vorgesehene Klemme des Gerätes eingespannt, mit dem anderen Ende in eine zweite Klemme eingespannt und mit einem Zuggewicht von 200 g beschwert. Der Probenstreifen wird auf eine auf 210°C beheizte Platte abgesenkt und die Schrumpfung als Längenänderung nach 2 min registriert.

Der elektronisch errechnete Schrumpfwert wird in Prozent angegeben und aus drei Messungen über die Bahnbreite ein Mittelwert errechnet.

Bedruckbarkeit: Die Blätter der Beispiel- und Vergleichsbeispielbahnmaterialien wurden mit dem Tiefdruckverfahren bedruckt. Dafür wurde ein "Printing Proofer" der RK PrintCoat Instruments Ltd., United Kingdom, benutzt. Die eingesetzte Tiefdruckplatte weist verschiedene Näpfchentiefen im Bereich von 51 µm (für 100% optische Druckdichte) bis 5,1 µm (für 10% optische Druckdichte) bei einer Druckdichte von 150 Linien/inch auf. Als Druckfarbe wird die wasserbasierte Tiefdruckfarbe 7006/10 der Arcolor AG, Schweiz, verwendet. Das erhaltene Druckbild wird visuell auf optische Dichte, sichtbare Anteile nicht bedruckter Fläche und fehlende übertragene Druckpunkte ("missing dots" untersucht mit Noten von 1 (ausgezeichnete Druckqualität) bis 5 (mangelhafte Druckqualität) bewertet.

Die Prüfergebnisse sind in Tabelle 1 zusammengefasst.

**Tabelle 1**

| Beispiel | Nassdehnung (%) | Schrumpf (%) | Bedruckbarkeit (Note) |
|---|---|---|---|
| V1 | 0,61 | -1,680 | 5 |
| V2 | 0,75 | -1,402 | 3 |
| V3 | 0,50 | -1,592 | 2 |
| V4 | 0,17 | -1,164 | 5 |
| 5 | 0,0 | -0,380 | 2 |
| 6 | 0,0 | -0,460 | 2 |
| 7 | 0,0 | -0,450 | 1 |

Die Messergebnisse zeigen, dass sowohl die Nassdehnung als auch das Schrumpfverhalten der erfindungsgemäßen Materialien bei den erfindungsgemäßen Faserverbundbahnen erheblich verbessert werden konnte, die Nassdehnung ist bei den erfindungsgemäßen Faserstoffverbundbahnen sogar kleiner als die mit der verwendeten Prüfungsmethode minimal detektierbaren Werte. Auch die Bedruckbarkeit der erfindungsgemäßen Faserstoffverbundbahnen liegt in einem guten bis ausgezeichneten Bereich.

## Patentansprüche

1. Basismaterial für trocken abziehbare Tapeten mit einem mehrschichtigen Faserstoffbahnverbund, **dadurch gekennzeichnet, dass** der Faserstoffbahnverbund mindestens eine erste Faserstoffbahn mit einer beim Einsatz der Tapete zur Oberfläche des zu beschichtenden Objekts weisenden Seite, mindestens eine geglättete zweite Faserstoffbahn mit einer beim Einsatz der Tapete nach außen weisenden Seite und mindestens eine zwischen den Faserstoffbahnen extrudierte Schicht eines thermoplastischen Polymers enthält, wobei die erste Faserstoffbahn ein größeres spezifisches Volumen als die zweite geglättete Faserstoffbahn aufweist.

2. Basismaterial nach Anspruch 1, **dadurch gekennzeichnet, dass** die erste Faserstoffbahn ein spezifisches Volumen von mehr als 1,3 cm³/g aufweist und die zweite Faserstoffbahn ein spezifisches Volumen von weniger als 1,3 cm³/g aufweist.

3. Basismaterial nach Anspruch 1 oder 2, **dadurch gekennzeichnet, dass** der Faserstoffbahnverbund an der zum beschichtenden Objekt weisenden Seite eine Glätte von weniger als 20 Bekk-Sekunden aufweist.

4. Basismaterial nach einem der Ansprüche 1 bis 3, **dadurch gekennzeichnet, dass** der Faserstoffbahnverbund an der nach außen weisenden Seite eine Glätte von mindestens 20 Bekk-Sekunden aufweist.

5. Basismaterial nach einem der Ansprüche 1 bis 4, **dadurch gekennzeichnet, dass** die extrudierte Schicht eine Polyolefinschicht mit einer Dicke von 5 bis 30 g/m² ist.

6. Basismaterial nach einem der Ansprüche 1 bis 5, **dadurch gekennzeichnet, dass** die voluminöse Faserstoffbahn Zellstofffasern und Polyesterfasern in einer Menge von 1 bis 50 Gew.-%, bezogen auf die Gesamtmenge der Fasern, enthält.

7. Basismaterial nach einem der Ansprüche 1 bis 6, **dadurch gekennzeichnet, dass** die voluminöse Faserstoffbahn mindestens zwei miteinander verbundenen Schichten enthält.

8. Basismaterial nach einem der Ansprüche 1 bis 7, **dadurch gekennzeichnet, dass** das Flächengewicht der voluminösen ersten Faserstoffbahn 50 bis 120 g/m² beträgt.

9. Basismaterial nach einem der Ansprüche 1 bis 8, **dadurch gekennzeichnet, dass** die zweite Faserstoffbahn keine Synthetik-Fasern enthält.

10. Basismaterial nach einem der Ansprüche 1 bis 9, **dadurch gekennzeichnet, dass** die zweite Faserstoffbahn ein hoch verdichtetes Papier mit einer Dichte von 0,9 bis 1,05 g/cm³ ist.

11. Basismaterial nach einem der Ansprüche 1 bis 10, **dadurch gekennzeichnet, dass** die zweite Faserstoffbahn ein hochgefülltes Papier mit einem Füllstoffgehalt von bis 50 Gew.-%, bezogen auf die Masse des Zellstoffs, ist.

12. Basismaterial nach einem der Ansprüche 1 bis 11, **dadurch gekennzeichnet, dass** die zweite Faserstoffbahn eine pigmenthaltige Schicht enthält.

13. Verfahren zur Herstellung eines Basismaterials nach einem der Ansprüche 1 bis 12, **dadurch gekennzeichnet, dass** man in einen durch eine erste und eine zweite Faserstoffbahn gebildeten Spalt eine Schmelze eines thermoplastischen Harzes extrudiert und unter Bildung eines Faserstoffbahnverbunds abkühlen lässt, wobei die erste Faserstoffbahn ein größeres spezifisches Volumen als die zweite Faserstoffbahn aufweist und die zweite Faserstoffbahn geglättet ist.

14. Verfahren zur Herstellung eines Basismaterials nach einem der Ansprüche 1 bis 12, **dadurch gekennzeichnet, dass** man auf einer Seite einer Kunststofffolie aus einem thermoplastischen Harz die erste Faserstoffbahn und auf der anderen Seite die zweite Faserstoffbahn unter Einwirkung von Druck und Wärme aufbringt, wobei die erste Faserstoffbahn ein größeres spezifisches Volumen als die zweite Faserstoffbahn aufweist und die zweite Faserstoffbahn geglättet ist.

15. Trocken abziehbare Tapete, enthaltend ein Basismaterial nach einem der Ansprüche 1 bis 12.

## Claims

1. Base material for dry-peelable wallpapers with a multi-layer composite fibre web, **characterised in that** the composite fibre web contains at least one first fibre web with one side pointing towards the surface of the object to be coated when the wallpaper is in use, at least one smoothed second fibre web with one side pointing outwards when the wallpaper is in use and at least one layer of a thermoplastic polymer extruded between the fibre webs, whereby the first fibre web has a greater specific volume than the second smoothed fibre web.

2. Base material according to Claim 1, **characterised in that** the first fibre web has a specific volume of more than 1.3 cm³/g and the second fibre web has a specific volume of less than 1.3 cm³/g.

3. Base material according to Claim 1 or 2, **characterised in that** the composite fibre web, on the side pointing towards the object to be coated, has a smoothness of less than 20 Bekk seconds.

4. Base material according to any one of Claims 1 to 3, **characterised in that** the composite fibre web, on the side pointing outwards, has a smoothness of at least 20 Bekk seconds.

5. Base material according to any one of Claims 1 to 4, **characterised in that** the extruded layer is a polyolefin layer with a thickness of 5 to 30 g/m².

6. Base material according to any one of Claims 1 to 5, **characterised in that** the voluminous fibre web contains cellulose fibres and polyester fibres in a quantity of 1 to 50 % w/w, based on the total quantity of the fibres.

7. Base material according to any one of Claims 1 to 6, **characterised in that** the voluminous fibre web contains at least two layers that are connected to each other.

8. Base material according to any one of Claims 1 to 7, **characterised in that** the grammage of the voluminous first fibre web is 50 to 120 g/m².

9. Base material according to any one of Claims 1 to 8, **characterised in that** the second fibre web does not contain any synthetic fibres.

10. Base material according to any one of Claims 1 to 9, **characterised in that** the second fibre web is a highly compacted paper with a density of 0.9 to 1.05 g/cm³.

11. Base material according to any one of Claims 1 to 10, **characterised in that** the second fibre web is a highly filled paper with a filler content of up to 50 % w/w, based on the mass of cellulose.

12. Base material according to any one of Claims 1 to 11, **characterised in that** the second fibre web contains a pigmented layer.

13. Method for producing a base material according to any one of Claims 1 to 12, **characterised in that** one extrudes a molten mass of a thermoplastic resin through a gap formed by a first and a second fibre web and allows it to cool, forming a fibre web composite, whereby the first fibre web has a greater specific volume than the second fibre web and the second fibre web is smoothed.

14. Method for producing a base material according to any one of Claims 1 to 12, **characterised in that** one applies the first fibre web to one side of a plastic film made from a thermoplastic resin and the second fibre web to the other side under the impact of pressure and heat, whereby the first fibre web has a greater specific volume than the second fibre web and the second fibre web is smoothed.

15. Dry-peelable wallpaper containing a base material according to any one of Claims 1 to 12.

## Revendications

1. Matériau de base pour des tapis pelables à sec comprenant un composite de nappes de matière fibreuse à plusieurs couches, **caractérisé en ce que** le composite de nappes de matière fibreuse contient au moins une première nappe de matière fibreuse ayant un côté tourné, lors de l'utilisation du tapis, vers la surface de l'objet à recouvrir, au moins une deuxième nappe de matière fibreuse lissée ayant un côté tourné vers l'extérieur lors de l'utilisation du tapis, et au moins une couche extrudée d'un polymère thermoplastique, ladite couche étant placée entre les nappes de matière fibreuse, où la première nappe de matière fibreuse présente un volume spécifique plus important que celui de la deuxième nappe de matière fibreuse lissée.

2. Matériau de base selon la revendication 1, **caractérisé en ce que** la première nappe de matière fibreuse présente un volume spécifique de plus de 1,3 cm³/g, et la deuxième nappe de matière fibreuse présente un volume spécifique de moins de 1,3 cm³/g.

3. Matériau de base selon la revendication 1 ou 2, **caractérisé en ce que** le composite de nappes de matière fibreuse présente, sur le côté tourné vers l'objet à recouvrir, un lissé Bekk de moins de 20 secondes.

4. Matériau de base selon l'une quelconque des revendications 1 à 3, **caractérisé en ce que** le composite de nappes de matière fibreuse présente, sur le côté tourné vers l'extérieur, un lissé Bekk au moins de 20 secondes.

5. Matériau de base selon l'une quelconque des revendications 1 à 4, **caractérisé en ce que** la couche extrudée est une couche de polyoléfine ayant une épaisseur de 5 g/m² à 30 g/m².

6. Matériau de base selon l'une quelconque des revendications 1 à 5, **caractérisé en ce que** la nappe de matière fibreuse volumineuse contient des fibres de pâte de cellulose et des fibres de polyester suivant une quantité allant de 1 % en poids à 50 % en poids par rapport à la quantité totale des fibres.

7. Matériau de base selon l'une quelconque des revendications 1 à 6, **caractérisé en ce que** la nappe de matière fibreuse volumineuse contient au moins deux couches combinées l'une à l'autre.

8. Matériau de base selon l'une quelconque des revendications 1 à 7, **caractérisé en ce que** le grammage de la première nappe de matière fibreuse volumineuse est de 50 g/m² à 120 g/m².

9. Matériau de base selon l'une quelconque des revendications 1 à 8, **caractérisé en ce que** la deuxième nappe de matière fibreuse ne contient aucune fibre synthétique.

10. Matériau de base selon l'une quelconque des revendications 1 à 9, **caractérisé en ce que** la deuxième nappe de matière fibreuse est un papier hautement comprimé ayant une densité de 0,9 g/cm³ à 1,05 g/cm³.

11. Matériau de base selon l'une quelconque des revendications 1 à 10, **caractérisé en ce que** la deuxième nappe de matière fibreuse est un papier hautement chargé ayant une teneur en matière de charge allant jusqu'à 50 % en poids par rapport à la masse de la pâte de cellulose.

12. Matériau de base selon l'une quelconque des revendications 1 à 11, **caractérisé en ce que** la deuxième nappe de matière fibreuse contient une couche contenant des pigments.

13. Procédé de fabrication d'un matériau de base selon l'une quelconque des revendications 1 à 12, **caractérisé en ce que**, dans un interstice formé par une première et une deuxième nappe de matière fibreuse, on extrude une masse fondue d'une résine thermostatique et on la laisse refroidir par formation d'un composite de nappes de matière fibreuse, où la première nappe de matière fibreuse présente un volume spécifique plus important que celui de la deuxième nappe de matière fibreuse, et la deuxième nappe de matière fibreuse est lissée.

14. Procédé de fabrication d'un matériau de base selon l'une quelconque des revendications 1 à 12, **caractérisé en ce que**, sur un côté d'une feuille en matière plastique se composant d'une résine thermoplastique, on applique la première nappe de matière fibreuse, la deuxième nappe de matière fibreuse étant appliquée sur l'autre côté sous l'effet de la pression et de la chaleur, où la première nappe de matière fibreuse présente un volume spécifique plus important que celui de la deuxième nappe de matière fibreuse, et la deuxième nappe de matière fibreuse est lissée.

15. Tapis pelable à sec contenant un matériau de base selon l'une quelconque des revendications 1 à 12.
